# FASCICULE DE BREVET EUROPEEN

(11) **EP 3 736 926 B1**
(45) Date de publication et mention de la délivrance du brevet: **10.07.2024**
(21) Numéro de dépôt: 20173107.2
(22) Date de dépôt: 06.05.2020
(51) Int. Cl.: H02B 1/56, H02G 5/10, H02G 5/02

(54) **DISPOSITIF COMPRENANT UN CONDUCTEUR ÉLECTRIQUE ET UN BOÎTIER**
VORRICHTUNG, DIE EINEN ELEKTRISCHEN LEITER UND EIN GEHÄUSE UMFASST
DEVICE COMPRISING AN ELECTRICAL CONDUCTOR AND A CASE

(30) Priorité: 07.05.2019 FR 1904768
(43) Date de publication de la demande: 11.11.2020
(73) Titulaire: Schneider Electric Industries SAS, 92500 Rueil Malmaison (FR)
(72) Inventeur: AGNAOU, Abderrahmane, 38050 GRENOBLE Cedex 09 (FR); WIEBEL, Sabine, 38050 GRENOBLE Cedex 09 (FR); LINARES, Louis, 38050 GRENOBLE Cedex 09 (FR); LEPRETRE, Pascal, 38050 GRENOBLE Cedex 09 (FR); CARRANTE, Jean-Michel, 38050 GRENOBLE Cedex 09 (FR)
(74) Mandataire: Lavoix

(56) Documents cités:
- CN-A- 1 083 966
- CN-U- 207 234 345
- CN-U- 208 422 538
- DE-A1- 102013 215 760
- DE-A1- 102016 209 134
- JP-B2- H 078 086
- JP-U- S6 055 209
- US-A1- 2011 284 264
- US-B2- 7 817 426

## Description

La présente invention concerne un dispositif comprenant un boîtier et au moins un conducteur électrique.

De nombreux dispositifs comprennent un ou des conducteur(s) électrique(s) contenus dans un boîtier délimitant une chambre, ce ou ces conducteurs électriques connectant entre eux des organes électriques contenus dans la chambre. Ces organes électriques sont, par exemple, des départs électriques, des disjoncteurs, des connecteurs électriques reliés à un réseau électrique externe, ou encore des organes de commutation ou des modules de calcul.

Dans de nombreux cas, les conducteurs et/ou les organes électriques sont fixés aux parois latérales du boîtier, qui les maintient alors en position sans nécessiter de châssis additionnel. Par exemple, les conducteurs électriques reliant les départs d'une armoire électrique à l'arrivée (qui reçoit le courant électrique d'un réseau électrique externe) sont fixés sur une face interne du boîtier.

Le fonctionnement de ces organes électriques et la circulation de courant électrique dans le ou les conducteurs causent naturellement un échauffement, susceptible dans d'atteindre plusieurs dizaines de degrés voire plus. Cependant, les matériaux dans lesquels les conducteurs et les différents organes électriques sont réalisés risquent d'être endommagés par un échauffement trop important. Par exemple, des conducteurs en cuivre peuvent être dégradés par des températures supérieures à 140 °C environ.

Afin d'empêcher un tel échauffement, il est notamment connu de dimensionner les conducteurs électriques en fonction du courant qu'ils doivent transporter, puisque l'échauffement d'un conducteur électrique dépend de la densité de courant. Ainsi, lorsque la section du conducteur est suffisante, l'échauffement du conducteur reste limité. En contrepartie, un conducteur prévu pour une intensité déterminée du courant ne peut être utilisé pour transporter un courant plus élevé ou, à intensité constante du courant, la section du conducteur électrique ne peut être diminuée en-dessous d'un seuil prédéterminé sans que l'échauffement ne devienne excessif. Il en résulte que la masse des conducteurs ne peut être diminuée en-dessous d'une certaine limite, et que le boîtier doit donc être dimensionné pour les supporter. Ainsi, de nombreuses contraintes jouent sur le dimensionnement du dispositif.

Les documents CN 1 083 966A, JP S60 55209 U, JP H07 8086 B2, US2011/284264A1, CN 208 422 538 U et DE 10 2013 215760 A1 décrivent des dispositifs comportant au moins un conducteur électrique, agencés pour augmenter la dissipation de chaleur.

Il existe un besoin pour un dispositif comportant un boîtier et au moins un conducteur électrique, qui permette une plus grande liberté de dimensionnement de ce conducteur.

A cet effet, il est proposé un dispositif comportant un boîtier, au moins un conducteur électrique conforme à a revendication 1.

Selon des modes de réalisation particuliers, le dispositif comporte un ou plusieurs des caractéristiques des revendications dépendantes 2 à 8, prise(s) isolément ou selon toutes les combinaisons techniquement possibles, tout en étant couvertes par les revendications jointes.

Des caractéristiques et avantages de l'invention apparaîtront à la lecture de la description qui va suivre, donnée uniquement à titre d'exemple non limitatif, et faite en référence aux dessins annexés, sur lesquels :
[Fig 1] la figure 1 est une représentation schématique d'un dispositif selon l'invention, comportant au moins un conducteur électrique et un support,
[Fig 2] la figure 2 est une vue en perspective d'un exemple de conducteur électrique et de support selon l'invention,
[Fig 3] la figure 3 est une vue en coupe du conducteur électrique et du support de la figure 2 selon le plan III, et
[Fig 4] la figure 4 est une vue en coupe du conducteur électrique et du support de la figure 2 selon le plan IV.

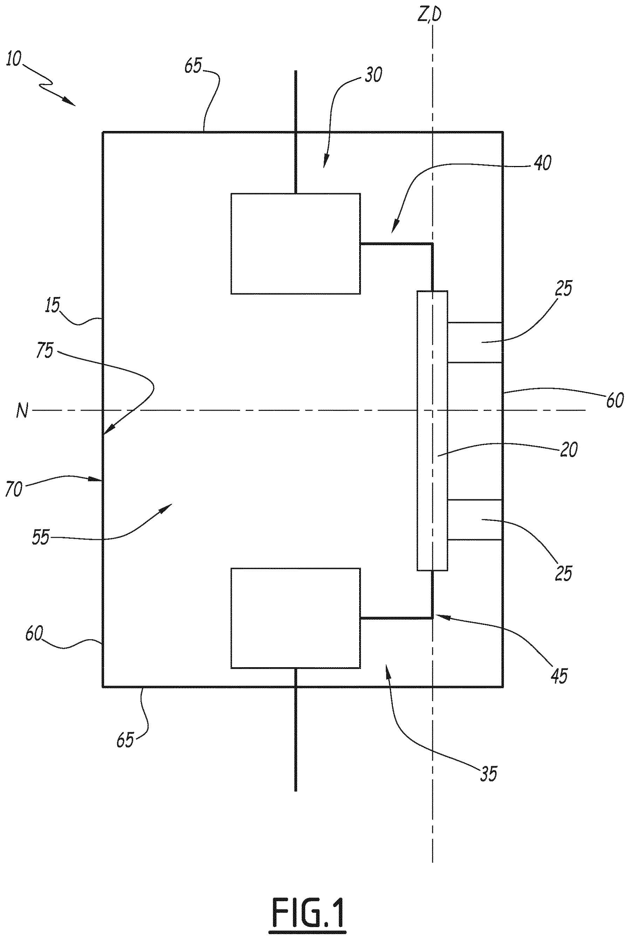

Un dispositif électrique 10 est représenté sur la figure 1.

Le dispositif électrique 10 comporte un boîtier 15, au moins un conducteur électrique 20 et, pour chaque conducteur électrique 20, au moins un support 25.

Le dispositif 10 est, par exemple, une armoire électrique comprenant une arrivée 30 et un ensemble de départs électriques 35, dont un seul est représenté sur la figure 1 pour plus de clarté. Dans ce cas, l'arrivée 30 est configurée pour être connectée électriquement à un réseau d'alimentation électrique, par exemple un réseau basse tension, c'est-à-dire un réseau présentant une tension entre 50 Volts (V) et 1000 V pour une tension continue ou entre 120 V et 1500 V pour une tension alternative. Chaque départ électrique 35 est prévu pour alimenter une installation électrique respective avec un courant électrique reçu de l'arrivée 30.

Chaque départ électrique 35 est électriquement connecté à l'arrivée 30 par au moins un conducteur électrique 20.

Par exemple, l'arrivée 30 comporte une pluralité de connecteurs électriques d'entrée 40, correspondant par exemple aux différentes phases du réseau, et chaque départ comporte plusieurs connecteurs électriques de sortie 45, chaque connecteur électrique d'entrée 40 étant électriquement connecté à un connecteur électrique de sortie 45 de chaque départ 35 par un conducteur électrique 20 correspondant. Les connecteurs électriques d'entrée 40 et de sortie 45 et les conducteurs électriques 20 forment alors un tableau de répartition électrique.

En complément facultatif, chaque départ électrique 30 et/ou l'arrivée 30 comporte au moins un disjoncteur 50 propre à interrompre le courant dans le départ électrique 35 ou l'arrivée 30.

En variante, le dispositif 10 est une armoire de distribution électrique, une armoire de contrôle machine ou tout autre enceinte servant à protéger un ou des appareils électriques.

Le boîtier 15 délimite une chambre 55. La chambre 55 accueille chaque conducteur électrique 20. Par exemple, la chambre 55 accueille chaque conducteur électrique 20, chaque connecteur électrique d'entrée 40 ou de sortie 45 et chaque disjoncteur 50.

Le boîtier 15 est, par exemple, réalisé en un matériau métallique tel que l'acier. En particulier, le boîtier 15 est réalisé en tôle d'acier.

Toutefois, il est à noter que d'autres matériaux sont également envisageables, par exemple d'autres matériaux métalliques, ou encore des matériaux composites ou plastiques.

Le boitier 15 comporte, par exemple, un ensemble de parois planes. En particulier, le boitier 15 est un boîtier parallélépipédique comportant six parois, par exemple quatre parois latérales 60 et deux parois terminales 65.

Les parois latérales 60 délimitent la chambre 55 dans un plan horizontal lorsque le dispositif 10 est en fonctionnement. Les parois latérales 60 délimitent la chambre 55 selon une direction verticale Z lorsque le dispositif 10 est en fonctionnement.

Il est défini pour le boîtier 15 un ensemble de faces internes 70 et un ensemble de faces externes 75. Chaque paroi latérale 60 est notamment délimitée par une face interne 70 et une face externe 75 de la paroi latérale 60 correspondante.

Il est défini une direction normale N pour chaque paroi latérale 60. La direction normale N est perpendiculaire à la face interne 70 de la paroi latérale 60.

Chaque paroi latérale 60 comporte au moins une ouverture 77 traversant la paroi latérale 60 entre la face externe 75 et la face interne 70 pour permettre la fixation du support à la paroi latérale 60.

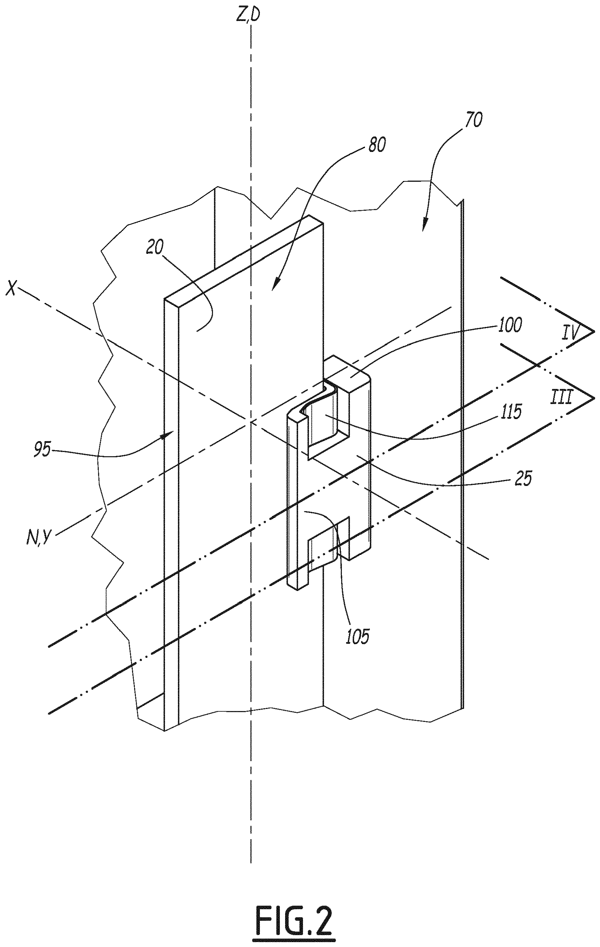

Chaque conducteur électrique 20 est, par exemple, une barre métallique. Par exemple, comme représenté sur la figure 2, le conducteur électrique 20 est une barre parallélépipédique. Dans ce cas, le conducteur électrique 20 s'étend selon une direction principale D, qui est par exemple parallèle à la direction verticale Z. Cependant, l'orientation de chaque conducteur électrique 20 est susceptible de varier.

En variante, chaque conducteur électrique 20 est un câble.

Il est défini une aire de section pour chaque conducteur électrique 20. L'aire de section est l'aire d'une surface perpendiculaire à la direction selon laquelle un courant électrique traversant le conducteur électrique 20 se propage en un point de la section. Par exemple, l'aire de section est l'aire d'une surface perpendiculaire à la direction principale D.

L'aire de section est comprise entre 250 millimètres carrés (mm²) et 1000 mm².

Lorsque le conducteur électrique 20 est une barre parallélépipédique, le conducteur 20 présente, par exemple, une première face latérale 80 et une deuxième face latérale 85 délimitant le conducteur électrique 20 selon une première direction X perpendiculaire à la direction principale, ainsi qu'une troisième face latérale 90 et une quatrième face latérale 95 délimitant le conducteur électrique 20 selon une deuxième direction Y perpendiculaire à la direction principale D et à la première direction X. La deuxième direction Y est, par exemple, parallèle à la direction normale N.

Une épaisseur du conducteur électrique 20, mesurée selon la première direction X, est comprise par exemple entre 5 millimètres (mm) et 10 mm.

Une largeur du conducteur électrique 20, mesurée selon la deuxième direction Y, est comprise par exemple entre 50 mm et 100 mm. En particulier, la largeur est strictement inférieure à l'épaisseur.

L'aire de section est, notamment, égale au produit de la largeur et de l'épaisseur.

Une longueur du conducteur électrique 20, mesurée selon la direction principale D, est comprise entre 15 centimètres (cm) et 200 cm.

Il est à noter que les dimensions du conducteur électrique 20 sont susceptibles de varier.

Chaque conducteur électrique 20 est réalisé en un matériau électriquement conducteur tel qu'un matériau métallique, notamment le cuivre. En variante, un autre matériau est susceptible d'être utilisé.

Chaque conducteur électrique 20 relie, par exemple, un connecteur électrique d'entrée 40 à un connecteur électrique de sortie 45 lorsque le dispositif 10 est une armoire électrique. Toutefois, selon des variantes envisageables, au moins un conducteur électrique 20 est électriquement connecté à un organe de commutation tel qu'un disjoncteur, à un capteur, à un module de calcul, à un autre conducteur électrique ou à tout autre type d'organe électrique.

Chaque conducteur électrique 20 est fixé au boîtier 15 par au moins un support 25, par exemple par au moins deux supports 25. Il est à noter que le nombre de supports 25 est susceptible de varier, notamment en fonction de la longueur du conducteur électrique 20.

Ainsi, chaque support 25 est configuré pour fixer un conducteur électrique 20 correspondant au boîtier 15, par exemple conjointement à un ou plusieurs autres supports 25 associés au même conducteur électrique 20.

Le conducteur électrique 20 est, notamment, fixé à une paroi latérale 60, notamment suspendu à la paroi latérale 60.

Il est notamment entendu par « suspendu » que le conducteur électrique 20 est supporté par la paroi latérale 60, par l'intermédiaire du support 25, sans que la paroi latérale 60 soit située en-dessous du conducteur électrique 20 lorsque le dispositif 10 est en fonctionnement. En particulier, le conducteur électrique 20 n'est pas supporté par la plus basse des parois 65, ni par un autre organe sur lequel le conducteur électrique 20 reposerait.

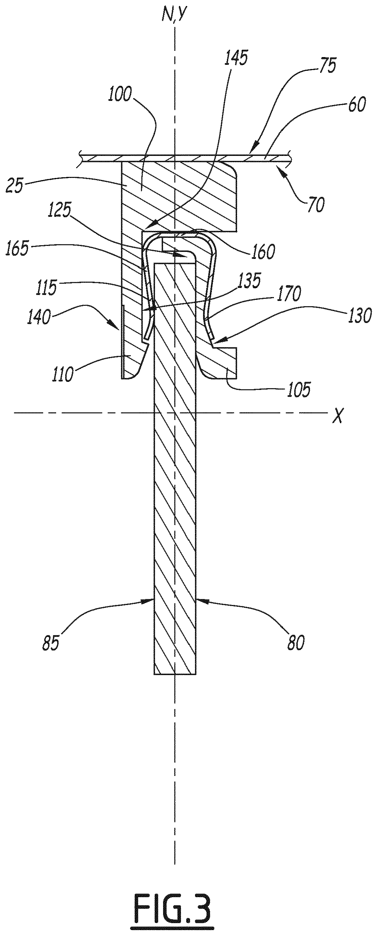

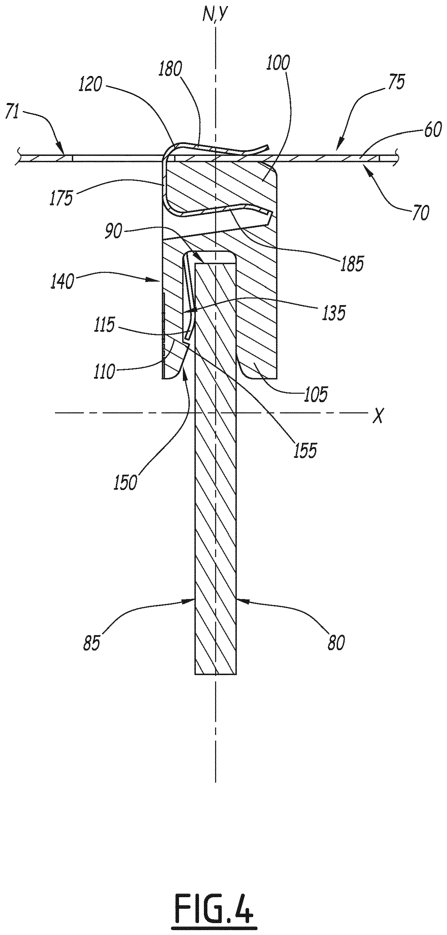

Le support 25 est représenté en détails sur la figure 2, et apparaît en coupe selon les plans III-III et IV-IV, respectivement, sur les figures 3 et 4.

Le support 25 est en contact conjointement avec le conducteur électrique 20 et avec le boîtier 15, notamment avec la face interne 70 de la paroi latérale 60 à laquelle le conducteur électrique 20 est fixé. Ainsi, le support 25 est propre à conduire un flux thermique depuis le conducteur 20 jusqu'au boîtier 15. En particulier, aucun matériau isolant électriquement n'est interposé entre le support 25 et le conducteur électrique 20.

Le support 25 est, notamment, au moins partiellement interposé entre la face interne 70 et le conducteur électrique 20.

Le support 25 est réalisé en un matériau présentant une conductivité thermique supérieure ou égale à 10 Watt par mètre et par Kelvin (W.m⁻¹.K⁻¹), notamment supérieure ou égale à 30 W.m⁻¹.K⁻¹, par exemple égale à 35 W.m⁻¹.K⁻¹.

En outre, le support 25 est réalisé en un matériau électriquement isolant, qui présente par exemple une conductivité électrique supérieure à 10¹⁰ Ohms-mètres.

Selon l'invention, le support 25 est réalisé en une céramique. Il est notamment entendu par « céramique » un matériau non-métallique et inorganique.

L'alumine, ou oxyde d'aluminium, Al₂O₃ est un exemple de céramique.

D'autres exemples de céramiques sont par exemple le nitrure d'aluminium, AIN, ou le nitrure de silicium Si₃N₄, ou encore le nitrure de bore BN.

Le support 25 présente une longueur, mesurée selon la direction principale D, compris entre 10 cm et 30 cm.

Selon l'exemple représenté sur les figures 2 à 4, le support 25 comporte une première portion 100, une deuxième portion 105 et une troisième portion 110. Par ailleurs, le dispositif 10 comporte, pour chaque support 25, au moins une première pince 115, notamment deux premières pinces 115, et au moins une deuxième pince 120.

La première portion 100, la deuxième portion 105 et la troisième portion 110 forment, comme il apparaîtra ci-dessous, un support 25 présentant une section en forme de « U » dans un plan perpendiculaire à la direction principale D.

La première portion 100, la deuxième portion 105 et la troisième portion 110 sont, par exemple, venues de matière les unes avec les autres. En d'autres termes, le support 25 est monobloc.

La première portion 100 est interposée selon la direction normale N entre la face interne 70 et le conducteur électrique 20, notamment la troisième face latérale 90. La première portion 100 est, en outre, interposée selon la direction normale N entre la face interne 70 et chacune de la deuxième portion 105 et de la troisième portion 110.

La première portion 100 est en appui contre la face interne 70 et est interposée entre la face interne 70 et le conducteur électrique 20.

La première portion 100 présente une épaisseur, mesurée selon la direction normale N, compris entre 10 mm et 50 mm.

La première portion 100 présente une largeur, mesurée selon la première direction X, comprise entre 20 mm et 100 mm.

La deuxième portion 105 s'étend à partir de la première portion 100 selon la direction normale N.

La deuxième portion 105 présente une première face 125 et une deuxième face 130. La première face 125 et la deuxième face 130 délimitent la deuxième portion 105 selon la première direction X.

La deuxième portion 105 présente, en outre, pour chaque première pince 115, une ouverture, notamment une fente, traversant la deuxième portion depuis la première face 125 jusqu'à la deuxième face 130.

La fente s'étend, en particulier, selon la direction principale D à partir d'une extrémité du support 25.

La première face 125 est en regard de la troisième portion 110. La première face 125 est, notamment, plane.

Le conducteur électrique 120 est en appui contre la première face 125. Par exemple, la première face latérale 80 est en appui contre la première face 125.

En particulier, comme il apparaîtra ci-dessous, le conducteur électrique 20 est plaqué contre la première face 125 par chaque première pince 115 correspondant au support 25.

La troisième portion 110 s'étend à partir de la première portion 100 selon la direction normale N.

La troisième portion 110 présente une troisième face 135 et une quatrième face 140. La troisième face 135 et la quatrième face 140 délimitent la troisième portion 110 selon la première direction X.

La troisième portion 110 présente, en outre, au moins une fente traversant la troisième portion 110 depuis la troisième face 135 jusqu'à la quatrième face 140.

La troisième face 135 est en regard de la deuxième portion 110.

La troisième face 135 présente une extrémité interne 145 et une extrémité externe 150 qui délimitent la troisième face 135 selon la direction normale N. L'extrémité interne 145 est en contact avec la première portion 100.

L'extrémité externe 150 comporte une saillie 155. La saillie 155 s'étend à partir de la troisième face 135 selon la direction X. En d'autres termes, la saillie 155 s'étend en direction de la deuxième portion 105 selon cette direction X.

Chaque première pince 115 est réalisée en un matériau métallique, par exemple en acier.

Chaque première pince 115 est configurée pour plaquer le conducteur électrique 20 contre la deuxième portion 105, notamment contre la première face 125.

Par exemple, chaque première pince 115 comporte une portion primaire 160, une portion secondaire 165 et une portion tertiaire 170.

La portion primaire 160 est accueillie au moins partiellement dans la fente de la deuxième portion 105.

La portion primaire 160 est, en outre, en appui contre la première portion 100, qui est notamment interposée entre la portion primaire 160 et la face interne 70. La portion primaire 106 est, par exemple, interposée entre la troisième face latérale 90 et la première portion 100.

Chacune de la portion secondaire 165 et de la portion tertiaire 170 s'étend selon la direction normale N à partir de la portion primaire 160.

Le conducteur électrique 20 est interposé entre la portion secondaire 165 et la première face 125. En particulier, la portion secondaire 165 est en appui contre la deuxième face latérale 85.

En outre, la portion secondaire 165 est interposée entre la saillie 155 et la première portion 100. Par exemple, une extrémité de la portion secondaire 165 est configurée pour venir en appui contre la saillie 155 pour empêcher un déplacement de la portion secondaire 165, selon la direction normale N, tendant à éloigner la portion secondaire 165 de la première portion 100.

Selon un mode de réalisation envisageable, la portion secondaire 165 présente une forme courbe s'éloignant de la deuxième face latérale 85 à l'extrémité de la portion secondaire 165. Par exemple, cette extrémité 165 est en appui contre la troisième portion 110, notamment contre la saillie 155.

La deuxième portion 105 est interposée entre la portion tertiaire 170 et le conducteur électrique 20. En particulier, la portion tertiaire 170 est en appui contre la troisième face 130.

Les portions primaire 160, secondaire 165 et tertiaire 170 coopèrent pour plaquer le conducteur électrique 20 contre la deuxième portion 105, par exemple du fait de l'élasticité du matériau composant la première pince 115.

Les portions primaire 160, secondaire 165 et tertiaire 170 sont, par exemple, venues de matière les unes avec les autres.

Chaque deuxième pince 120 est configurée pour fixer le support 20 au boîtier 15, notamment à la paroi latérale 60 correspondante. En particulier, chaque deuxième pince 120 est configurée pour venir en appui contre la face externe 75 et contre la première portion 100 pour plaquer le support 25 contre la face interne 70.

Chaque deuxième pince 120 est, par exemple, identique structurellement à la première pince 115.

La portion primaire de la deuxième pince 120 est nommée par la suite portion intermédiaire 175.

La portion intermédiaire 175 est accueillie au moins partiellement dans l'ouverture 77. En particulier, la portion intermédiaire 175 est en appui contre l'une des faces délimitant l'ouverture 77, notamment une face inférieure de l'ouverture 77, de sorte que la portion intermédiaire 175 transfère à la paroi latérale 60 au moins une partie du poids du support 25 et du conducteur électrique 20.

La portion secondaire de la deuxième pince 120 est nommée par la suite portion externe 180. La portion externe 180 est en appui contre la face externe 75.

La portion tertiaire de la deuxième pince 120 est nommée par la suite portion interne 185. La portion interne 185 est en appui contre la première portion 100, notamment contre une face d'une ouverture ménagée dans la première portion 100.

La portion externe 180, la portion intermédiaire 175 et la portion interne 185 coopèrent pour plaquer la première portion 100 contre la face interne 70, par exemple du fait de l'élasticité de la deuxième pince 120.

Il est à noter que, bien que le support 25 a été décrit ci-dessus dans un cas où le support coopère avec les premières pinces 115 pour fixer le conducteur 20 au boîtier, des modes de réalisation dans lesquels aucune première pince 115 n'est présente sont également envisageables mais ne sont pas couvertes par l'invention. Par exemple, le conducteur 20 est engagé à force entre les deuxième et troisièmes portions 105 et 110, le conducteur 20 étant alors maintenu en position par la force exercée sur le conducteur 20 par les portions 105 et 110. En variante, le conducteur 20 présente une saignée dans laquelle la saillie 155 est engagée, une face de la saillie reposant par exemple contre la saillie 155 pour faire supporter le poids du conducteur électrique 20 au support 25.

Selon une autre variante, aucune deuxième pince 120 n'est utilisée, par exemple si la première portion 100 est reçue dans une cavité ou une ouverture du boîtier 15.

Il est également à noter que des modes de réalisation dans lesquels, en addition aux supports 20 en céramique, des supports réalisés dans un autre matériau sont également présents sont également envisageables.

Par ailleurs, des modes de réalisation dans lesquels la forme des supports 25 est différente de la forme représentée sur les figures 2 à 4 sont également envisagés, dès lors qu'ils sont couverts par les revendications.

Le support 25, en céramique, permet d'isoler électriquement le conducteur 20 du boîtier 15 tout en permettant un transfert thermique entre le conducteur 20 et le boîtier 15. Ainsi, le refroidissement du conducteur 20 est amélioré. A intensité de courant transporté égale, la section du conducteur 20 est susceptible d'être réduite ; il en résulte que la quantité de matériau nécessaire pour fabriquer le conducteur 20 est réduite, de même que la masse du conducteur 20. En conséquence, le boîtier 15 est susceptible d'être plus fin, et le prix du conducteur 20 est diminué.

A section de conducteur 20 égale, l'intensité du courant traversant le conducteur 20 est susceptible d'être augmentée.

L'alumine est particulièrement adaptée à un usage en tant que support 25, du fait de sa bonne conductivité thermique et de son caractère électriquement isolant.

Des barres métalliques sont des exemples de conducteurs électriques 20 susceptibles de transporter des courants élevés.

Il est particulièrement utile de pouvoir diminuer la section des conducteurs lorsqu'ils sont suspendus aux parois latérales 60 du boîtier 15.

Des supports 25 comportant une première portion 100 et une deuxième portion 105 contre laquelle le conducteur 20 est en appui permettent un maintien efficace du conducteur 20 en position et un bon contact thermique entre celui-ci et le support 25, notamment via l'appui contre la deuxième portion 105. Ainsi, le refroidissement du conducteur électrique 20 est amélioré.

Dans cette configuration, la ou les première(s) pince(s) 115 permettent de fixer simplement le conducteur 20 au support 25. En outre, lorsque la ou les première(s) pince(s) 115 est (sont) réalisée(s) en un matériau métallique, la ou les première(s) pince(s) 115 participe(nt) aussi au transfert thermique entre le conducteur électrique 20 et le support 25 et ainsi au refroidissement du conducteur électrique 20.

De même, l'utilisation de la deuxième pince 120 permet de fixer le support 25 simplement à la paroi latérale 60, et améliore encore le transfert thermique entre le support 25 (et donc le conducteur 20) et le boîtier 15, ce qui participe au refroidissement du conducteur électrique 20. Le montage du dispositif 10 est simplifié lorsque la deuxième pince 120 est identique aux premières pinces 115.

La troisième portion 110 permet de protéger le conducteur 20 contre les chocs. En outre, la troisième portion 110 permet d'assurer un meilleur maintien en position des premières pinces 115 et donc du conducteur électrique 20, tout en permettant un transfert thermique amélioré lorsque la troisième portion 110 est en contact avec le conducteur 20 ou avec la ou les premières pinces 115.

## Revendications

1. Dispositif (10) comportant un boîtier (15), au moins un conducteur électrique (20), et au moins un support (25), le conducteur électrique (20) étant configuré pour transporter un courant électrique, le boîtier (15) délimitant une chambre (55) accueillant le conducteur électrique (20), le support (25) étant configuré pour fixer le conducteur électrique (20) au boîtier (15), le boîtier (15) étant notamment réalisé en un matériau métallique,
le support (25) étant réalisé en une céramique, le support (25) étant en contact conjointement avec le conducteur électrique (20) et avec le boîtier (15), dispositif (10) étant **caractérisé en ce que** le support (25) comporte une première portion (100) en appui contre une face interne (70) du boîtier (15) et une deuxième portion (105), la première portion (100) étant interposée entre le conducteur électrique (20) et le boîtier (15) selon une première direction (Y), la deuxième portion (105) s'étendant à partir de la première portion (100) selon la première direction (Y), le conducteur électrique (20) étant en appui contre la deuxième portion (105), la première direction (Y) étant notamment une direction perpendiculaire à la face interne (70) du boîtier (15), dans lequel la deuxième portion (105) présente une première face (125) et une deuxième face (130) opposée à la première face (125), la première face (125) et la deuxième face (130) délimitant la deuxième portion (105) selon une deuxième direction (X), perpendiculaire à la première direction (Y), le conducteur électrique (20) étant en appui contre la première face (125), le dispositif (10) comportant, en outre, pour chaque support (25), au moins une première pince (115), notamment métallique, configurée pour venir en appui contre la deuxième face (130) pour plaquer le conducteur électrique (20) contre la première face (125).

2. Dispositif selon la revendication 1, dans lequel le boîtier (15) comprend un ensemble de parois latérales (60) délimitant la chambre (55) dans un plan horizontal, le support (25) étant configuré pour suspendre le conducteur (20) à une paroi latérale (60).

3. Dispositif selon la revendication 1 ou 2, dans lequel l'une au moins des propriétés suivantes est vérifiée :
- le boîtier (15) est réalisé en un matériau métallique, notamment en acier,
- le conducteur (20) est une barre métallique.

4. Dispositif selon l'une quelconque des revendications précédentes, dans lequel la céramique est l'alumine.

5. Dispositif selon l'une quelconque des revendications précédentes, prise avec la revendication 2, dans lequel la paroi latérale (60) à laquelle le conducteur (20) est suspendu est délimitée selon la première direction (Y) par la face interne (70) et par une face externe (75), le dispositif (10) comportant, en outre, pour chaque support (25), au moins une deuxième pince (120) configurée pour venir en appui contre la face externe (75) et contre la première portion (100) pour plaquer la première portion (100) contre la face interne (70), la deuxième pince (120) étant notamment identique à la première pince (115).

6. Dispositif selon l'une quelconque des revendications précédentes, dans lequel le support (25) comporte, en outre, une troisième portion (110) s'étendant à partir de la première portion (100) selon la première direction (Y), le conducteur électrique (20) étant intercalé entre la deuxième portion (105) et la troisième portion (110) selon la deuxième direction (X) perpendiculaire à la première direction (Y).

7. Dispositif selon l'une quelconque des revendications précédentes, comportant au moins deux supports (25) pour chaque conducteur électrique (20).

8. Dispositif selon l'une quelconque des revendications précédentes, le dispositif (10) étant une armoire de distribution électrique comportant une pluralité de départs électriques (35) et une arrivée (30), l'arrivée (30) étant propre à recevoir un courant électrique, notamment basse tension, d'un réseau électrique auquel l'arrivée (30) est propre à être raccordée, chaque départ électrique (35) étant configuré pour être électriquement connecté à une installation électrique que le départ électrique (35) est apte à alimenter électriquement, chaque conducteur électrique (20) étant configuré pour connecter électriquement un départ électrique (35) respectif à l'arrivée (30).

## Patentansprüche

1. Vorrichtung (10), die ein Gehäuse (15), mindestens einen elektrischen Leiter (20) und mindestens einen Träger (25) umfasst, wobei der elektrische Leiter (20) so konfiguriert ist, dass er einen elektrischen Strom transportiert, wobei das Gehäuse (15) eine Kammer (55) begrenzt, in der die elektrische Leitung (20) untergebracht ist, wobei der Träger (25) konfiguriert ist, um den elektrischen Leiter (20) an dem Gehäuse (15) zu befestigen, wobei das Gehäuse (15) insbesondere aus einem metallischen Material hergestellt ist,
wobei der Träger (25) aus einer Keramik hergestellt ist, wobei der Träger (25) in gemeinsamem Kontakt mit dem elektrischen Leiter (20) und dem Gehäuse (15) steht, wobei die Vorrichtung (10) **dadurch gekennzeichnet ist, dass** der Träger (25) einen ersten Abschnitt (100), der an einer Innenfläche (70) des Gehäuses (15) anliegt, und einen zweiten Abschnitt (105) umfasst, wobei der erste Abschnitt (100) zwischen dem elektrischen Leiter (20) und dem Gehäuse (15) in einer ersten Richtung (Y) angeordnet ist, wobei sich der zweite Abschnitt (105) von dem ersten Abschnitt (100) aus in Richtung (Y) erstreckt. Der elektrische Leiter (20) liegt an dem zweiten Abschnitt (105) an, wobei die erste Richtung (Y) insbesondere eine Richtung senkrecht zur Innenfläche (70) des Gehäuses (15) ist, wobei der zweite Abschnitt (105) eine erste Seite (125) und eine zweite Seite (130) gegenüberliegend zur ersten Seite (125) aufweist, wobei die erste Seite (125) und die zweite Seite (130) den zweiten Abschnitt (105) gemäß einer zweiten Richtung (X), die senkrecht zu der ersten Richtung (Y) ist, begrenzen. Der elektrische Leiter (20) liegt an der ersten Seite (125) an, wobei die Vorrichtung (10) außerdem für jeden Träger (25) mindestens eine erste Klemme (115), insbesondere eine Metallklemme umfasst, die so konfiguriert ist, dass sie gegen die zweite Seite (130) anliegt, um den elektrischen Leiter (20) gegen die erste Seite (125) zu pressen.

2. Vorrichtung nach Anspruch 1, bei der das Gehäuse (15) einen Satz von Seitenwänden (60) umfasst, die die Kammer (55) in einer horizontalen Ebene begrenzen, wobei der Träger (25) so konfiguriert ist, dass er den Leiter (20) an einer Seitenwand (60) aufhängt.

3. Vorrichtung nach Anspruch 1 oder 2, bei der mindestens eine der folgenden Eigenschaften überprüft wird:
- das Gehäuse (15) besteht aus einem metallischen Material, insbesondere aus Stahl,
- der Leiter (20) ist ein Metallstab.

4. Vorrichtung nach einem der vorherigen Ansprüche, wobei die Keramik Aluminiumoxid ist.

5. Vorrichtung nach einem der vorhergehenden Ansprüche in Verbindung mit Anspruch 2, bei der die Seitenwand (60), an der der Leiter (20) aufgehängt ist, in der ersten Richtung (Y) durch die Innenseite (70) und durch eine Außenseite (75) begrenzt ist, wobei die Vorrichtung (10) außerdem für jeden Träger (25) mindestens eine zweite Klemme (120) enthält, die so konfiguriert ist, dass sie gegen die Außenfläche (75) und gegen den ersten Abschnitt (100) anliegt, um den ersten Abschnitt (100) gegen die Innenfläche (70) zu drücken, wobei die zweite Klemme (120) insbesondere mit der ersten Klemme (115) identisch ist.

6. Vorrichtung nach einem der vorhergehenden Ansprüche, wobei der Träger (25) außerdem einen dritten Abschnitt (110) aufweist, der sich vom ersten Abschnitt (100) aus in der ersten Richtung (Y) erstreckt, wobei der elektrische Leiter (20) zwischen dem zweiten Abschnitt (105) und dem dritten Abschnitt (110) in der zweiten Richtung (X) senkrecht zur ersten Richtung (Y) eingefügt ist.

7. Vorrichtung nach einem der vorhergehenden Ansprüche, die mindestens zwei Träger (25) für jeden elektrischen Leiter (20) umfasst.

8. Vorrichtung nach einem der vorhergehenden Ansprüche, wobei die Vorrichtung (10) ein Stromverteilungsschrank ist, der eine Vielzahl von elektrischen Abgängen (35) und eine Einspeisung (30) umfasst, wobei die Einspeisung (30) geeignet ist, einen elektrischen Strom, insbesondere Niederspannung, von einem elektrischen Netz zu empfangen, an das die Einspeisung (30) angeschlossen werden kann. Jeder elektrische Abgang (35) ist so konfiguriert, dass er elektrisch mit einer elektrischen Anlage verbunden werden kann, die der elektrische Abgang (35) in der Lage ist, zu versorgen, wobei jeder elektrische Leiter (20) so konfiguriert ist, dass er einen jeweiligen elektrischen Abgang (35) mit der Ankunft (30) elektrisch verbindet.

## Claims

1. A device (10) comprising a housing (15), at least one electrical conductor (20), and at least one support (25), the electrical conductor (20) being configured to carry an electrical current, the housing (15) delimiting a chamber (55) receiving the electrical conductor (20), the support (25) being configured to fix the electrical conductor (20) to the housing (15), the housing (15) being made in particular of a metallic material,
the support (25) being made of a ceramic, the support (25) being in contact jointly with the electrical conductor (20) and with the housing (15), the device (10) being **characterised in that** the support (25) comprises a first portion (100) bearing against an internal face (70) of the housing (15) and a second portion (105), the first portion (100) being interposed between the electrical conductor (20) and the housing (15) in a first direction (Y), the second portion (105) extending from the first portion (100) in a second direction (Y), the electrical conductor (20) bearing against the second portion (105), the first direction (Y) being in particular in a direction perpendicular to the internal face (70) of the housing (15), in which the second portion (105) has a first face (125) and a second face (130) opposite to the first face (125), the first face (125) and the second face (130) delimiting the second portion (105) in a second direction (X), perpendicular to the first direction (Y), the electrical conductor (20) bearing against the first face (125), the device (10) further comprising, for each support (25), at least one first clamp (115), in particular metal, configured to bear against the second face (130) to press the electrical conductor (20) against the first face (125).

2. A device according to claim 1, wherein the housing (15) comprises a set of side walls (60) delimiting the chamber (55) in a horizontal plane, the support (25) being configured to suspend the conductor (20) from a side wall (60).

3. A device according to claim 1 or 2, wherein at least one of the following properties is verified:
- the housing (15) is made of a metallic material, in particular steel,
- the conductor (20) is a metal bar.

4. A device according to any one of the preceding claims, wherein the ceramic is aluminium oxide.

5. A device according to any one of the preceding claims, taken together with claim 2, in which the side wall (60) from which the conductor (20) is suspended is delimited in the first direction (Y) by the inside face (70) and by an outside face (75), the device (10) further including, for each support (25), at least one second clamp (120) configured to bear against the outside face (75) and against the first portion (100) in order to press the first portion (100) against the inside face (70), the second clamp (120) being in particular identical to the first clamp (115).

6. A device according to any one of the preceding claims, in which the support (25) further comprises a third portion (110) extending from the first portion (100) in the first direction (Y), the electrical conductor (20) being interposed between the second portion (105) and the third portion (110) in the second direction (X) perpendicular to the first direction (Y).

7. A device according to any one of the preceding claims, comprising at least two supports (25) for each electrical conductor (20).

8. A device according to any one of the preceding claims, the device (10) being an electrical distribution cabinet comprising a multitude of electrical outlets (35) and an inlet (30), the inlet (30) being suitable for receiving an electrical current, in particular a low voltage current, from an electrical network to which the inlet (30) is suitable for being connected, each electrical outlet (35) being configured to be electrically connected to an electrical installation that the electrical outlet (35) is able to electrically supply, each electrical conductor (20) being configured to electrically connect a respective electrical outlet (35) to the inlet (30).
